# EUROPÄISCHE PATENTSCHRIFT

(11) **EP 0 553 333 B1**
(45) Veröffentlichungstag und Bekanntmachung des Hinweises auf die Patenterteilung: **28.05.1997**
(21) Anmeldenummer: 92917981.0
(22) Anmeldetag: 17.08.1992
(51) Int. Cl.: G11B 33/04, G11B 23/023, F16B 12/20, A47B 81/06

(54) **AUFBAU-/ANBAUBEHÄLTNIS FÜR SCHALLPLATTEN UND KASSETTEN**
MODULAR/EXTENDABLE CONTAINER FOR RECORDS AND CASSETTES
BOITE DE RANGEMENT MODULAIRE EXTENSIBLE POUR DISQUES ET CASSETTES

(30) Priorität: 15.08.1991 DE 9110070 U
(43) Veröffentlichungstag der Anmeldung: 04.08.1993
(73) Patentinhaber: KOZIOL GESCHENKARTIKEL GMBH, D-64711 Erbach (DE)
(72) Erfinder: KOZIOL, Stephan, D-6120 Erbach (DE)
(74) Vertreter: Chambosse, Hans-Joachim
(86) Internationale Anmeldenummer: DE9200696
(87) Internationale Veröffentlichungsnummer: WO9304474

(56) Entgegenhaltungen:
- EP-A- 0 155 601
- WO-A-91/11809
- DE-A- 3 106 511
- DE-U- 9 110 070
- FR-A- 2 506 492
- GB-A- 2 002 328
- GB-A- 2 183 454
- US-A- 3 563 624
- US-A- 3 999 818

## Beschreibung

Die Erfindung betrifft ein Behältnis zur Sammlung und Aufbewahrung von Schallplatten, insbesondere Kompaktschallplatten, sowie Radio- und/oder Videokassetten bei dem eine Erweiterung durch den Aufbau oder Anbau von zusätzlichen Elementen (Boxen) möglich ist.

Neben den handelsüblichen Behältnissen für Schallplatten und/oder Kassetten, die von vornherein nur für eine fest vorbestimmte Anzahl von Schallplatten oder Kassetten ausgestaltet und nicht erweiterbar sind, sind auch erweiterungsfähige Behältnisse bekannt. Bei diese werden mehrere Elemente entweder aufeinander oder nebeneinander gestellt. Eine feste Verbindung dieser Elemente fehlt jedoch; allenfalls sind Fixierungsstifte und -bohrungen oder Anschlagleisten im Bereich des Aufsatzes eines Elements auf dem darüberliegenden vorhanden. Diese Behältnisse haben daher den Nachteil keiner festen und dauerhaften Verbindung, so daß insbesondere die auf ein Element gestellten weiteren Elemente leicht umgeworfen werden und herabstürzen können. Diese Gefahr besteht namentlich bei einer Kopflastigkeit eines aufgesetzten Elements durch nur teilweise Füllung mit Schallplatten usw. und bei der Herausnahme der Tonträger durch den Benutzer.

Aus US-A-3 563 624 sind erweiterungsfähige Kombinations möbel zur Aufbewahrung von kleineren Gegenständen, wobei mehrere Basiseinheiten mittels Verbindungsmittel, z.B. Schrauben, aufeinander oder an einander gesetzt werden können, bekannt.

Der Erfindung liegt die Aufgabe zugrunde, ein Behältnis der eingangs genannten Art zu schaffen, bei dem eine feste und dauerhafte, jedoch lösbare Verbindung der auf- bzw. angebauten Elemente erfolgt, der Nutzraum des Behältnisses bzw. der Elemente nicht durch hervorstehende Verbindungsteile eingeschränkt und behindert wird sowie die Verbindung mit wenigen Handgriffen und auch durch technische Laien möglich ist.

Diese Aufgabe wird erfindungsgemäß durch die im kennzeichnenden Teil des Schutzanspruchs 1 aufgeführten Merkmale gelöst. In Weiterführung der Erfindung werden gemäß den Unteransprüchen vorteilhafte Ausgestaltungen aufgeführt.

Es folgt die Beschreibung eines Ausführungsbeispiels anhand von Zeichnungen. Dabei zeigen
- Fig. 1: das erfindungsgemäße Aufbaubehältnis in schematischer Darstellung mit drei Elementen vor der Verbindung;
- Fig. 2: das erfindungsgemäße Aufbaubehältnis mit zwei Elementen in zusammengesetztem Zustand;

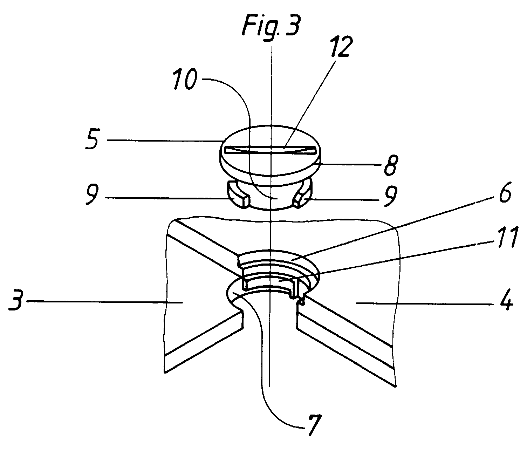

- Fig. 3: als Detail aus Fig. 1 und 2 die Bajonettschraube und die Bohrungen in zwei aufeinandergesetzten Elementen vor Einsetzung der Bajonettschraube;

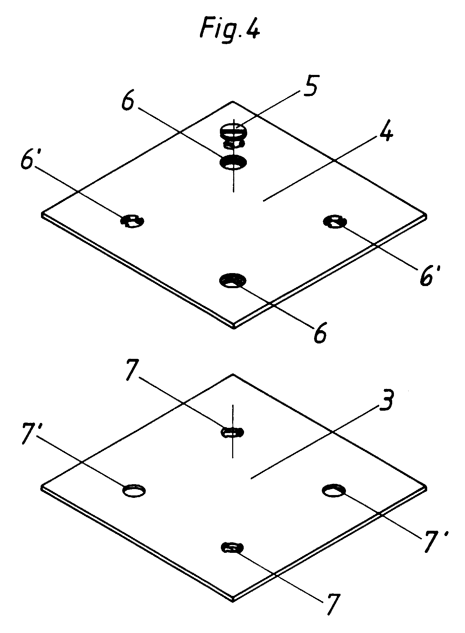

- Fig. 4: das Detail gemäß Fig. 3 mit den Ausschnitten aus den beiden Elementen vor ihrem Aufbau.

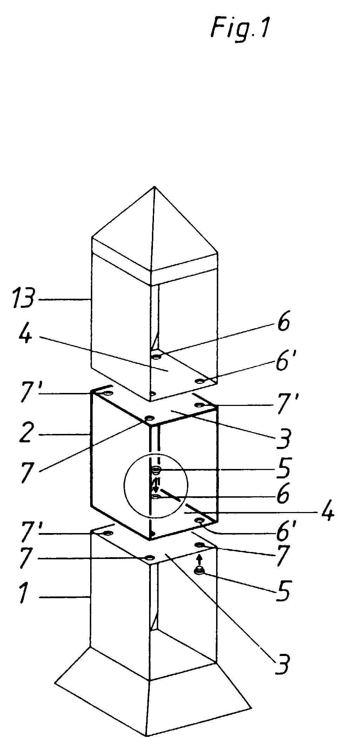

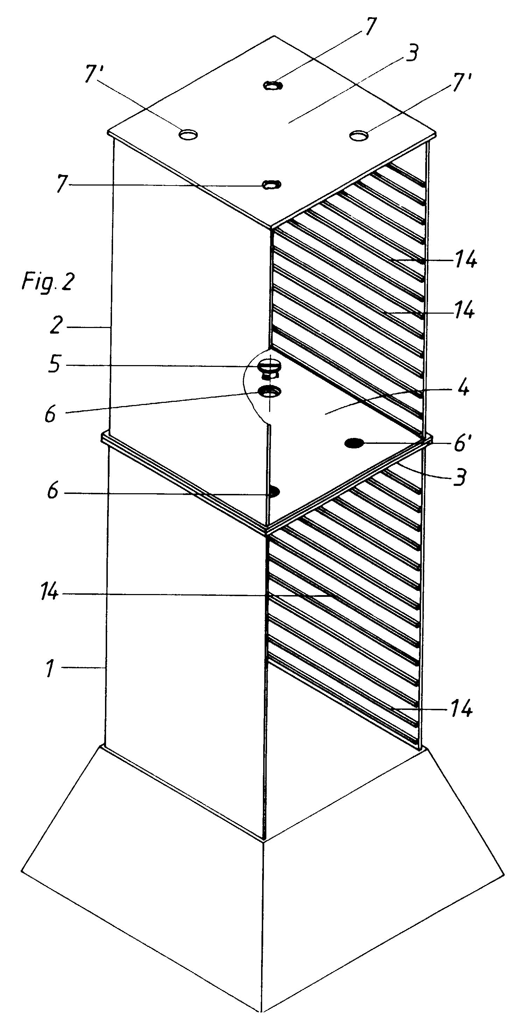

Das in Fig. 2 dargestellte erfindungsgemäße Behältnis besteht aus den beiden aufzubauenden Elementen (Boxen) 1 und 2, das in Fig. 1 dargestellte aus den drei aufzubauenden Elementen 1, 2 und 13. Diese werden aufeinandergesetzt. Die Decke 3 der Elemente 1, 2, 13 und der Boden 4 der Elemente 2 und 13 sind ebene Flächen; sie können jedoch auch anders geformt sein, wobei sie ebenfalls formschlüssig ineinandergreifen. Die Elemente 1 und 2 sowie 2 und 13 werden im Bereich der Flächen 3 und 4 durch wenigstens eine, im dargestellten Ausführungsbeispiel jedoch vier Bajonettschrauben 5 fest, jedoch lösbar verbunden, die durch korrespondierende Bohrungen 6, 6' und 7, 7' in der Decke 3 und dem Boden 4 geführt sind.

Die Bajonettschraube 5 hat einen Flachkopf 8 und an ihrem entgegengesetzten Ende wenigstens einen, vorteilhafterweise zwei nockenartige Bajonettansätze 9 am Schraubenhals 10.

Die Bohrung 6 im Boden 4 des Elements 2 bzw. 13 entspricht auf der Innenseite der Elemente in ihrem Durchmesser dem Durchmesser des Schraubenkopfs 8 und reicht in ihrer Tiefe bis zur Höhe/Stärke des Schraubenkopfs 8, so daß die Bajonettschraube 5 nach ihrer Einführung in den Boden 4 darin voll versenkt ist. Im anschließenden Bereich verjüngt sich die Bohrung 6 im Boden 4 zu einem Durchmesser, der dem größten Durchmesser des Schraubenhalses 10 mit den Bajonettansätzen 9 entspricht. Die der Bohrung 6 des Elements 2 bzw. 13 zugeordnete und mit ihr korrespondierende Bohrung 7 in der Decke 3 des Elements 1 bzw. 2 hat an der Innenseite des Elements 1 bzw. 2 einen Durchmesser, der dem des Schraubenhalses 10 der Bajonettschraube 5 mit den Bajonettansätzen 9 entspricht. Im anschließenden Bereich dieser Bohrung ragen nach der Außenseite des Elements 1 bzw. 2 zu nockenartige Vorsprünge 11 in den Bereich der Bohrung hinein, die von den Bajonettansätzen 9 der Bajonettschraube 5 nach deren Einsetzung in die aufeinandergesetzten Elemente 1 und 2 bzw. 2 und 13 sowie Drehung der Bajonettschraube 5 untergriffen werden. Die Länge der Bajonettschraube 5 einschließlich des Schraubenkopfs 8 entspricht höchstens der zusammengerechneten Stärke des Bodens 4 des Elements 2 und der Decke 3 des Elements 1 bzw. des Bodens 4 des Elements 13 und der Decke 3 des Elements 1 im aufeinandergesetzten Zustand.

In vorteilhafter Weiterbildung der Erfindung sind - wie in Fig. 1 und 2 dargestellt - mehrere Verbindungen zwischen den beiden Elementen 1 und 2 bzw. 2 und 13 vorgesehen, wobei die Bohrungen 6', 7' spiegelbildlich gegenüber den Bohrungen 6, 7 angebracht sind; z.B. entspricht die Bohrung 6' im Boden 4 des Elements 2 in ihrer Ausgestaltung also der Bohrung 7 in der Decke 3 des Elements 1 und die Bohrung 7' des Elements 1 der Bohrung 6 des Elements 2.

Zur weiteren Vereinfachung der Montage ist die Bajonettschraube 5 vorteilhafterweise mit einem breiten Schlitz 12 versehen, der den Einsatz einer Münze zum Verdrehen ermöglicht.

Nach der Einführung der Bajonettschraube 5 durch die Bohrungen 6, 7 bzw. 6'. 7' der aufeinandergesetzten Elemente 1 und 2 bzw. 2 und 13 und entsprechender Drehung der Bajonettschraube schließt diese bündig, also ohne Überstände an den Innenseiten der Decke 3 und des Bodens 4, ab.

Bei dem erfindungsgemäßen Behältnis mit Anbauelementen sind die Bohrungen statt in Decke und Boden der Elemente 1, 2 und 13 in den zu verbindenen beiden Außenwänden der Anbauelemente angebracht; im übrigen stimmen Form und Anbringung der Bohrungen sowie die Bajonettschrauben mit der Ausgestaltung bei dem Behältnis mit Aufbauelementen überein.

Zur Demontage des Behältnisses bzw. Herausnahme eines Elements bedarf es lediglich der Entriegelung der Bajonettschrauben und deren Entfernung.

Mit der Erfindung wird ein aufbaubares bwz. anbaubares Behältnis für Schallplatten und Kassetten erzielt, bei dem zwei oder mehrere Elemente fest und dauerhaft, jedoch leicht wieder lösbar verbunden werden. Diese stabile Verbindung wird bereits mit Hilfe nur einer Bajonettschraube erreicht, die durch die korrespondierenden Bohrungen von Decke bzw. Boden der zwei aneinandergrenzenden Elemente des Behältnisses geführt wird. Bei der Wahl mehrerer solcher Verbindungen für zwei Elemente wird die Stabilität noch erhöht. Aufgesetzte bzw. angesetzte Elemente können nicht beim Herausnehmen von Schallplatten oder Kassetten, durch Anstoß oder infolge Kopflastigkeit herabfallen. Durch die Ausgestaltung der Bajonettschrauben und ihre Einfügung in die Elemente bleiben Boden und Decke der Elemente auch auf ihren Innenseiten völlig eben, da die Bajonettschraube auf keiner Seite herausragt. Der Aufbau und ebenso die Demontage von Elementen oder des ganzen Behältnisses ist mit wenigen Handgriffen auch für den technischen Laien möglich, wobei bei Anbringung eines entsprechend größeren Schlitzes in der Bajonettschraube sogar ein Schraubenzieher nicht erforderlich ist. Durch die erfindungsgemäße Gestaltung können Aufbaubehältnisse mit einer Mehrzahl von Elementen und mit einem Fassungsvermögen für Schallplatten und Kassetten hergestellt werden, die bisher nicht möglich waren.

## Patentansprüche

1. Aufbau-/Anbaubehältnis für Schallplatten und Kassetten (Audio- und/oder Videokassetten), bestehend aus zwei oder mehreren aufeinandergesetzten Elementen (1, 2, 13) mit Aufnahmevorrichtungen (14) für die einzulegenden Schallplatten und Kassetten, dadurch gekennzeichnet, daß die Elemente (1, 2, 13) im Bereich der Decke (3) des einen und des Bodens (4) des anderen durch zwei oder mehrere Bajonettschrauben (5) fest, jedoch lösbar verbunden sind, wobei die Bajonettschraube (5) einen Flachkopf (8) und an ihrem entgegengesetzten Ende wenigstens einen nockenartigen Bajonettansatz (9) am Schraubenhals (10) hat und in übereinanderliegende Bohrungen (6, 6') des Bodens (4) des einen Elements und (7, 7') der Decke (3) des anderen eingesetzt ist und auf den Innenseiten der Elemente (1, 2, 13) mit den Flächen des Bodens (3) des einen und der Decke (4) des anderen bündig ohne Überstände abschließt, ferner daß die Bohrung (6) im Boden (4) der Elemente (2, 13) und die Bohrung (7') in der Decke (3) der Elemente (1, 2) bis zur Höhe/Stärke des Schraubenkopfs (8) dessen Durchmesser hat und sich im daran anschließenden Teil des Bodens zum größten Durchmesser des Schraubenhalses (10) einschließlich der Bajonettansätze (9) verjüngt, während die Bohrung (6') im Boden (4) der Elemente (2, 13) und die Bohrung (7) in der Decke (3) der Elemente (1, 2) den Durchmesser des Schraubenhalses (10) der Bajonettschraube (5) zuzüglich der Bajonettansätze (9) hat und in die Bohrungen (6', 7) nockenartige Vorsprünge (11) hineinragen, die die Bajonettansätze (9) der Bajonettschraube (5) untergreifen, und daß die Bajonettschrauben (5) reziprok einerseits von der Innenseite der Elemente (2, 13) her in deren Boden (4) mit der Bohrung (6) eingesetzt sind und in die Bohrung (7) der Decke (3) des angrenzenden Elements eingreifen sowie andererseits von der Innenseite der Elemente (1, 2) her in deren Decke (3) mit Bohrung (7') eingesetzt sind und in die Bohrung (6') im Boden (4) des angrenzenden Elements eingreifen.

2. Aufbau-/Anbaubehältnis für Schallplatten und Kassetten, bestehend aus zwei oder mehreren aneinandergesetzten Elementen (1, 2, 13), nach Anspruch 1, dadurch gekennzeichnet, daß die zwei oder mehreren seitlich aneinandergesetzten Elemente (1, 2, 13) mittels einer oder mehrerer Bajonettschrauben (5) über Bohrungen (6, 6', 7, 7') mit den aneinandergrenzenden Außenwänden der Elemente (1, 2, 13) verbunden sind.

3. Aufbau-/Anbaubehältnis für Schallplatten und Kassetten nach Anspruch 1 oder 2, dadurch gekennzeichnet, daß die Bajonettschraube (5) im Schraubenkopf (8) einen verbreiterten Schlitz (12) zur Einführung einer Geldmünze hat.

## Claims

1. Modular / extendable container for records and cassettes (audio and/or video cassettes), consisting of two or more elements mounted above one another (1, 2, 13) with devices to carry (14) records and cassettes to be laid in, characterized in that the elements (1, 2, 13) in the top (3) of one element and in the bottom (4) of the other element are tightly but detachably connected to each other by means of two or more bayonet screws (5), with the bayonet screw (5) having a flat head (8) and at its opposite side at least one cam-type bayonet stud (9) at the screw neck (10) and being inserted in boreholes (6, 6') of the bottom (4) of the one element and placed above boreholes (7, 7') of the top (3) of the other element and finishing on the interior sides of the elements (1, 2, 13), with the surfaces of the bottom (3) of the one element and the top (4) of the other, flush and without any projections, further characterized in that the borehole (6) in the bottom (4) of the elements (2, 13) and the borehole (7') in the top (3) of the elements (1, 2) having the same diameter as the screw head (8) up to the height/thickness of the screw head (8) and in the adjoining part of the bottom receding to reach the maximum screw neck (10) diameter including the bayonet studs (9), while the borehole (6') in the bottom (4) of the elements (2, 13) and the borehole (7) in the top (3) of the elements (1, 2) having the same diameter as the screw neck (10) of the bayonet screw (5) plus the bayonet studs (9) and cam-type projections (11) penetrating into the boreholes (6', 7) reaching under the bayonet studs (9) of the bayonet screw (5) and that the bayonet screws (5), being inserted, in a reciprocal manner, on one hand from the interior side of the elements (2, 13) into their bottoms (4) through the borehole (6), and reaching into the borehole (7) of the top (3) of the adjoining element and, on the other hand, being inserted from the interior side of the elements (1, 2) into their tops (3) through the borehole (7') and reaching into the borehole (6') in the bottom (4) of the adjoining element.

2. Modular / extendable container for records and cassettes, consisting of two or more laterally mounted elements (1, 2, 13) in accordance with claim 1, characterized in that the two or more laterally mounted elements (1, 2, 13) are connected by means of one or more bayonet screws (5) through the boreholes (6, 6', 7, 7') to the adjoining exterior walls of the elements (1, 2, 13).

3. Modular / extendable container for records and cassettes in accordance with claims 1 or 2, characterized in that the bayonet screw (5) in the screw head (8) has a widened slot (12) for insertion of a coin.

## Revendications

1. Boîte de rangement modulaire extensible pour disques et cassettes (cassettes audio et/ou vidéo), se composant de deux ou plusieurs éléments superposés (1, 2, 13) avec des dispositifs (14) pour recevoir les disques et les cassettes à ranger, caractérisée en ce que les éléments (1, 2, 13) sur la partie supérieure (3) de l'un et sur la partie inférieure (4) de l'autre sont reliés, tout en étant amovibles, par deux ou plusieurs vis à baïonnette (5), la vis à baïonnette (5) ayant une tête plate (8) et, à son autre extrémité, au moins une partie de baïonnette en forme de saillie (9) sur le collet de vis (10) et étant insérée sur deux trous superposés (6, 6') dans la partie inférieure (4) d'un élément et (7, 7') dans la partie supérieure (3) de l'autre et assemble à fleur, sans déborder, des parties intérieures des éléments (1, 2, 13) les surfaces de la partie inférieure (3) de l'un et de la partie supérieure (4) de l'autre, de plus en ce que le trou (6) dans la partie inférieure (4) des éléments (2, 13) et le trou (7') dans la partie supérieure (3) des éléments (1, 2) a le diamètre de la tête de la vis jusqu'à la hauteur/épaisseur de cette tête de vis (8) et diminue ensuite sur la portion de la partie inférieure qui y fait suite pour atteindre le diamètre du collet de la vis le plus grand (10) y compris la partie de la baïonnette (9) alors que le trou (6') dans la partie inférieure (4) des éléments (2, 13) et le trou (7) dans la partie supérieure (3 ) des éléments (1, 2) est du diamètre du collet de vis (10) de la vis à baïonnette (5) plus les parties de baïonnette (9) et que des parties en forme de saillie (11) s'impriment dans les trous (6', 7), parties en forme de saillie venant au-dessous des parties à baïonnette (9) de la vis à baïonnette (5) et en ce que les vis à baïonnette (5) sont placées réciproquement, d'une part, de la partie intérieure des éléments (2, 13) dans leur partie inférieure (4) avec le trou (6) et dans le trou (7) de la partie supérieure (3) de l'élément voisin ainsi que, d'autre part, de la partie intérieure des éléments (1, 2) dans leur partie supérieure (3) avec le trou (7') et s'insèrent dans le trou (6') dans la partie inférieure (4) de l'élément voisin.

2. Boîte de rangement modulaire extensible pour disques et cassettes se composant de deux ou plusieurs éléments joints (1, 2, 13) selon la revendication 1, caractérisée en ce que les deux ou plusieurs éléments (1, 2, 13) fixés latéralement les uns aux autres sont reliés aux parois extérieures voisines les unes aux autres des éléments (1, 2, 13) à l'aide d'une ou plusieurs vis à baïonnette (5) dans des trous (6, 6', 7, 7')

3. Boîte de rangement modulaire extensible pour disques et cassettes selon les revendications 1 ou 2, caractérisée en ce que la vis à baïonnette (5) porte, sur la tête de vis (5) une fente élargie (12) pour l'insertion d'une pièce de monnaie.
